# EUROPEAN PATENT APPLICATION

(11) **EP 4 155 063 A1**
(43) Date of publication of application: **29.03.2023**
(21) Application number: 21198822.5
(22) Date of filing: 24.09.2021
(51) Int. Cl.: B29D 99/00, B29B 11/16, B29C 70/44, B29C 70/30, B29C 70/36

(54) **METHOD FOR MANUFACTURING AT LEAST A PART OF A WIND TURBINE BLADE, WIND TURBINE BLADE PART AND WIND TURBINE**

(71) Applicant: Siemens Gamesa Renewable Energy A/S, 7330 Brande (DK)
(72) Inventor: Nielsen, Anette Struve, 8464 Galten (DK); Nielsen, Mogens, 9220 Aalborg (DK)
(74) Representative: SGRE-Association

(57) **Abstract**

Method for manufacturing at least a part (6) of a wind turbine blade (2) in a resin-based casting process using a mold (7), wherein at least one preform element (9), at least one further preform element (10) and at least one laminate supporting element (11) are arranged in the mold (7), wherein the preform element (9) is arranged on a molding surface (8) of the mold (7) and extends over a section of the circumference of the blade part (6) to be manufactured, wherein the laminate supporting element (11) is arranged on the preform element (9) and the further preform element (10) is arranged on the laminate supporting element (11), wherein the preform element (9) and the further preform element (10) extend over the entire circumference of the blade part (6) to be manufactured, wherein the preform elements (9, 10) are at least partly infused with a resin for casting of the blade part (6) .

## Description

The invention relates to a method for manufacturing at least a part of a wind turbine blade in a resin-based casting process using a mold. Furthermore, the invention relates to a wind turbine blade part and a wind turbine.

The manufacturing of wind turbine blades is a special challenge, in particular due to the large size of the wind turbine blades. It is known to fabricate wind turbine blades as integral structures or to assemble them from multiple, separately manufactured wind turbine blade parts. Normally, wind turbine blades are manufactured from fiber-based materials like glass fibers, which are infused by a resin in a resin-based casting process. The process for manufacturing of an integral blade using a mold and fiber material is disclosed in EP 1 310 351 B1.

However, the blade molds used in the manufacturing of wind turbine blades, or the wind turbine blade parts, respectively, become larger as the size of the wind turbine blades grow in width and length. Correspondingly, also the size of the components used for manufacturing the wind turbine blade, for instance glass fiber fabric or the like, grow in size so that also the lay-up process of arranging the components in the mold becomes more challenging.

For example, glass fiber mats which extend over an entire circumference of the blade become large and therefore heavy so that their handling and their arrangement becomes difficult. In particular in regions of a wind turbine blade that require a high material thickness, for instance the root section of the blade, a large amount of fiber material is used in manufacturing so that the lay-up process is tedious and cumbersome. In addition, the arrangement of large and therefore heavy pieces of fiber glass fabric in the manufacturing process requires safety equipment like fall lines due to the large height of work, in particular when wrapping the fiber glass fabric around a core support for forming an integral blade. This increases the time which is needed for the manufacturing of the wind turbine blade, or the wind turbine blade part, respectively, so that the output of the manufacturing facility decreases correspondingly.

It is therefore the object of the invention to provide a method for manufacturing at least a part of a wind turbine blade which facilitates the manufacturing process, in particular with regard to the lay-up of material in a mold used in the manufacturing process.

According to the invention, this problem is solved by a method as initially described, wherein at least one preform element, at least one further preform element and at least one laminate supporting element are arranged in the mold, wherein the preform element is arranged on a molding surface of the mold and extends over a section of the circumference of the blade part to be manufactured, wherein the laminate supporting element is arranged on the preform element and the further preform element is arranged on the laminate supporting element, wherein the preform element and the further preform element extend over the entire circumference of the blade part to be manufactured, wherein the preform elements are at least partly infused with a resin for casting of the blade part.

The usage of preform elements in the manufacturing of the blade facilitates the lay-up of the material, or the packing of the mold, respectively. The preform elements comprise for instance several layers of glass fiber fabric that are placed on top of each other and locally adhered to each other by application of binder in between the layers of fiber fabric to prevent them for moving relative to each other. Therefore, the preform elements can be provided with varying shapes adapted to the wind turbine blade part to be fabricated, or to the mold or its molding surface, respectively. The preform elements may also be denominated as preform parts, or preform components, respectively.

By using the preform elements, the pacing of the mold, in particular the arrangement of fiber-based material in the mold prior to the resin infusion, is facilitated so that a reduced manufacturing time can be achieved. By providing the fiber-based material like glass fibers as preform elements outside the blade mold, it is possible to quickly arrange it in the blade mold. Advantageously, the preform elements may be manufactured in varying sizes. A wind turbine blade, in particular an integral blade, may comprise a sandwich laminate structure. The preform elements can have the same laminate structure so that each preform elements forms a segment of the laminate structure of the blade. Additionally or alternatively, the sandwich laminate structure may be composed from a plurality of stacked preform elements.

Advantageously, the lay-up process may be carried out in a mold that has a reasonable working height facilitating the arrangement. The size of the preform elements may be adjusted to facilitate their manufacture and their handling, in particular their manual placement, for avoiding heavy lifting by the operators. In addition, since the components of the individual preform elements can be oriented at the best possible angle in a separate mold used for manufacturing the preform elements, an improved packing quality compared to arrangement of all components in the larger blade mold may be achieved. Also risk of wrinkles during the layup of fiber mats, especially in the upper section of the blade part to be manufactured, is significantly reduced. In case of incorrect placement of preform element components like fiber glass or core material, a repacking of the individual preform element is possible and a repacking of the entire blade mold may be prevented. Furthermore, the lay-up process of preform elements does not have the same demands for building ceiling height, reinforced concrete floor and/or crane capacity, so that the production of preform elements can take place in separate and cheaper buildings reducing the space required for the blade production.

The method for manufacturing may be used for fabricating at least a part of a wind turbine blade, hence the wind turbine blade part to be fabricated is an entire wind turbine blade or a part of a wind turbine blade. As part of a wind turbine blade, for instance a root section of a wind turbine blade or a half shell of a wind turbine blade, which is connectable to a second half shell for forming an entire wind turbine blade, may be fabricated. The wind turbine half shells may be attached for instance using gluing or mechanical connections like bolts or laminated joints.

For manufacturing the wind turbine blade part, one or more preform elements are arranged on a molding surface of the mold. The preform element may be lifted to the mold individually. It is also possible that several preform elements are assembled outside of the mold forming a rack, wherein the rack is lifted and placed in the mold. This allows for simultaneously placing a plurality of preform elements as a unit. The preform element arranged first on the molding surface extends over a section of the circumference of the blade. It is also possible that a plurality of preform elements is placed in the mold, wherein the preform elements are arranged adjacently to each other so that the plurality of preform elements extends over a section of the circumference of the blade part to be manufactured. For instance, half of the circumference of the blade part may be covered by the preform elements arranged on the molding surface. It is also possible that more or less than half of the circumference is formed from the preform elements.

The shape of the circumference of the blade part may depend on the portion of the wind turbine blade part, which is formed by the preform elements. For instance, the circumference may be circular or approximately circular in a root section of a wind turbine blade or it may have the shape of the cross section of an air foil in the sections distanced from the root and towards the tip. It is also possible that a half shell of a wind turbine blade or the like is fabricated, wherein in this case a section of the circumference of the blade part is formed by the preform elements arranged on the molding surface.

To allow the further preform elements to cover the entire circumference of the blade part to be manufactured, at least one laminate supporting element is arranged on the preform elements that are arranged on the molding surface of the mold. The laminate supporting element allows to arrange the further preform elements on the laminate supporting element so that the entire circumference of the blade part to be manufactured may be formed by the preform elements arranged on the molding surface and on the laminate supporting element.

The arrangement of preform elements on top of the laminate supporting element allows for reducing or omitting process steps like circumferential wrapping with fiber mats, at least in sections of the blade part to be manufactured. This may increase the quality of the arrangement and reduces the work which has to be done by operators at elevated heights.

The laminate supporting element may be for instance a so-called mandrel, which fills the interior of the wind turbine blade part to be manufactured. In particular, to facilitate the arrangement, more than one laminate supporting element may be used. It is in particular possible to use two or more mandrels which extend over the entire longitudinal length of the wind turbine blade part to be fabricated and which are abutting each other in chord-wise direction of the blade part. The laminate supporting element, or the mandrel, respectively, may also be used as a support element for the vacuum bags used in the resin infusion process.

After arrangement of the preform elements and/or further components used for manufacturing of the blade part, the preform elements are at least partly infused with a resin for casting the blade part. In particular, preform elements comprising only layers of fiber material may be entirely infused. In preform elements comprising both layers of a fiber material and a rigid core structure, at least the layers of fiber material may be infused with the resin, since depending on the used core structure, a resin infusion into the core structure may not be possible. The infusion occurs in particular in a vacuum assisted process, for example in a vacuum assisted resin transfer molding process, and the resin is in particular cured after the infusion to solidify and to form a rigid wind turbine blade, or wind turbine blade part, respectively.

Preferably, one or more fiber mats are arranged adjacently to the preform elements in a longitudinal direction of the blade part to be manufactured, between the molding surface and at least one of the preform elements, on at least one of the preform elements, and/or between the supporting element and at least one of the preform elements.

The longitudinal direction of the blade part to be manufactured spans from a root-side end of the wind turbine blade part to a tip-side end of the wind turbine blade part, so that the longitudinal direction may also be denominated as the spanwise-direction of the wind turbine blade part to be manufactured. In addition to the preform elements, also the fiber mats that are arranged in longitudinal direction adjacently to the preform elements may be used to encompass or to wrap a part of the circumference, or the entire circumference, of the wind turbine blade part to be manufactured. The fiber mats may also be arranged adjacently to the preform elements in a longitudinal direction of the blade part, so that for instance a root-side part of a blade may be formed from the preform elements and the more tip-wise sections of the blade are formed by one or more glass fiber layers. This facilitates the manufacturing process, since in particular in root-wise portions of a wind turbine blade part, large amounts of fiber material is needed. In the tip-wise portions of the blade, less amount of fiber material is needed, so that these sections of a wind turbine blade, or wind turbine blade parts forming these sections, may be manufactured efficiently by using glass fiber mats, since only a reduced amount of fiber material is needed.

It is also possible to arrange the fiber mats between the preform elements and the laminate supporting element, so that for instance an inner surface of the wind turbine blade part may be formed by the one or more fiber mats. The fiber mats may also be arranged on top of the further preform elements, in particular when a continuous layer of fiber material arranged partly on the molding surface and therefore partly underneath the laminate supporting element is wrapped around the outer circumference of the blade part.

Preferably, a plurality of preform elements is arranged on the molding surface and/or on the laminate supporting element, wherein adjacently arranged preform elements are abutting in circumferential direction and/or in longitudinal direction of the blade part to be manufactured. By arranging a plurality of preform elements on the molding surface and/or on the laminate supporting element, in particular the entire circumference of the blade part may be formed by using preform elements with a size that is less cumbersome to handle. Advantageously, the modular concept of the manufacturing method according to the invention allows for using smaller preform parts than conventional approaches.

The preform elements may each be arranged in direct contact to one or more other preform elements so that a continuous surface may be formed by the preform elements. In particular, the abutting preform elements are attached to each other by the infused and cured resin so that a solid structure of the blade part to be manufactured may be obtained. In particular, the abutting preform elements may partially overlap in an interface section, or at their contact surfaces, respectively. In particular, different layers and/or structures of the preform elements may be overlapping in the interface sections between two adjacently arranged and abutting preform elements. The adjacently arranged and abutting preform elements may sectionally overlap in the circumferential direction, in the longitudinal direction and/or in a radial direction, in which the components are stacked in the mold. This allows for improving the integrity and the stability of the blade part at the contact surfaces.

Preferably, the preform elements are arranged in such manner that the contact surfaces of two or more neighbouring pairs of longitudinally abutting preform elements have an offset in the longitudinal direction and/or that the contact surfaces of two or more neighbouring pairs of circumferentially abutting preform elements have an offset in the circumferential direction. By providing offsets between the contact surfaces of adjacently arranged pairs of abutting preform elements in the longitudinal direction and/or in the circumferential direction, the occurrence of cracks along the contact surfaces of a manufactured wind turbine blade may be avoided.

The contact surfaces between two abutting preform elements may be for instance straight. It is also possible that the e preform elements are cut at an angle or with a scarved cut. In addition or alternatively, the edges of the preform elements may comprise flanges or fingers to provide an increased contact surfaces with a more complex geometry, in particular to increase the stability and/or the integrity of the wind turbine blade in the transition area between adjacently arranged preform elements. In particular, when fiber mats are arranged adjacently to the preform elements in longitudinal direction, the contact surface form between the preform elements and the fiber mats may be straight, and in particular perpendicular to the longitudinal direction of the blade part to be manufactured, so that the alignment between the preform elements and the fiber mats is facilitated.

In a preferred embodiment, the abutting edges of a pair of abutting preform elements form a joint connection, wherein the joint connection is connected during the arrangement of the preform elements. By providing joint connections between the abutting edges at the contact surfaces of a pair of abutting preform elements, the stability of the wind turbine blade part at the contact surfaces may be increased after casting. By the joint connections, the preform elements, or the different layers of the preform elements, respectively, may be connected to neighbouring preform elements, or their respective layers, respectively.

Preferably, for at least a part of the abutting preform elements, preform elements comprising a core segment arranged between at least one inner layer and at least one outer layer of a fiber material are used, wherein the inner layers, the outer layers and/or the core segments of two adjacently arranged preform elements form each a butt joint or a scarf joint. This allows to join the one or more inner layers of one preform element to the one or more inner layers of another preform element arranged adjacently and abutting to the first preform element. Correspondingly, also the core segments and/or the one or more outer layers of the first preform element may abut the core segment, or the one or more outer layers, respectively, of the second preform element in a butt joint or in a scarf joint.

Preferably, the joints between the inner layers, the core segments and/or the outer layers of two adjacently arranged preform elements are arranged with a circumferential and/or longitudinal offset towards each other. By providing circumferential and/or longitudinal offsets between the joints at the same contact surface between two preform elements, the stability and/or the integrity of the wind turbine blade part at the contact surfaces between two adjacently arranged preform elements may be increased. By providing the offsets between the joints of the core segments, the inner layers and/or the outer layers, an overlap between the preform elements at the contact interfaces may be created. The partially overlapping layers and core components of the preform elements increase the stability and/or the integrity of the blade part to be manufactured.

It is possible that for instance the core segments of two preform elements are joined using a butt joint, wherein the joints between the inner and outer layers are aligned to each other but offset from the joint of the core segments. It is also possible that the core segments may be joined using a scarf joint and also the inner and outer layers may be joint each with a scarf joint, or the core segments may be joined using a butt joint and the inner and outer layers are joint using a scarf joint. The joint between the core segments, the joint between the inner layers as well as the joint between the outer layers may be aligned in circumferential or longitudinal direction towards each other. Also an alignment in a vertical or radial direction of the mold is possible.

In an embodiment, at least two further preform elements are arranged on the laminate supporting element, wherein the further preform elements are arranged in circumferential direction offset from a peak of the circumference of the blade part to be manufactured. This avoids that one preform element has to be arranged on the peak of the circumference, or around the highest point of the circumference from ground, respectively. Advantageously, this reduces the height to which the preform elements have to be lifted facilitating their arrangement. Furthermore, the required ceiling height for the production facility is reduced, in particular when a lifting means like a crane is used for arranging the further preform elements on the laminate supporting element.

Preferably, the preform elements are provided on at least one support device, wherein the support device comprises one or more supporting segments that support the preform element in a shape corresponding to the shape of the preform element in the wind turbine blade part to be manufactured. The support device may be for instance a rack that supports a stack of a plurality of equally shaped preform element. The supporting segments of the support device may have for instance a convex or concave shape, so that the plurality of bent preform elements may be stored on the support device. In particular, the support device may be movable, for instance rollable, so that the preform elements may be transported using the support device.

By providing the preform elements already in a shape corresponding to the shape of the preform element in the wind turbine blade part to be manufactured, the positioning of the preform elements in the mold is facilitated and they are provided already in their final geometrical shape. In particular, the preform elements arranged on the molding surface, or prior to the laminate supporting element, respectively, may be provided on a support device with concave supporting segments and the further preform elements arranged on top of the laminate supporting element may be provided on a support device with convex supporting segments so that the preform elements may be arranged by tilting them not more than 90°.

Since the preform elements may consist of a plurality of components which are only locally adhered, they may be flexible, at least to some extent, so that their geometry may change during transportation and/or storing. By providing them on the support device already in their correct shape, the arrangement of the preform elements, for instance by lifting them from the support device to the mold and/or to the laminate supporting element, is facilitated since they can be picked up while comprising their desired geometry.

Preferably, the preform elements are arranged on the molding surface and/or on the laminate supporting element using a lifting means, in particular an adaptable and/or automated lifting means. The lifting means may be adapted to the shape of the preform elements, which are lifted using the lifting means. Preferably, an adaptable lifting means may be used, so that the same lifting means may be used for lifting differently shaped and/or differently oriented preform elements on the molding surface and/or on the laminate supporting element. The lifting means may be automated, so that the process of lifting the preform elements and/or of arranging them in the mold may be conducted automatically facilitating the manufacturing process and reducing the amount of manual labor in the manufacturing process.

Preferably, at least one precasted component and/or at least one sensor device are arranged between the molding surface and at least one of the preform elements, between the laminate supporting element and at least one of the preform elements, and/or on at least one of the preform elements. Preferably, a root segment, a beam structure and/or a lightning conductor is used as precasted component.

The root segments may each form or encompass a segment of the for instance cylindrical root section of the wind turbine blade. They may be used to reinforce in particular a root-side end of the wind turbine blade part, which is attached to a hub when the wind turbine blade is mounted to a wind turbine. Precasted components like beam structures and shear webs may be arranged in particular in between one or more laminate supporting elements for forming a beam structure connecting an upper half of the blade to a lower half and/or a leading edge to a trailing edge. Also electrical components like lightning conductors and/or one or more sensor devices may be provided and arranged between the components forming the wind turbine blade part during the manufacturing process to allow for embedding them in the structure of the wind turbine blade part.

Preferably, the preform elements are arranged in a portion of the mold corresponding to a root-side end of a wind turbine blade, in particular in a portion which corresponds to 10 % to 30 % of the spanwise length of a wind turbine blade from its root-side end. The root-side end of the wind turbine blade may also be denominated as in-board part of the blade. When an entire wind turbine blade is fabricated as wind turbine blade part, the preform elements may be used to form the root-side end portion of the wind turbine blade, in particular the first 10 % to 30 %, preferably the first 15 % to 25 %, for example 20 %, of the spanwise-length from the root-side end of the wind turbine blade.

Alternatively, also a root section of a blade forming a root-side end section of a blade comprising multiple blade parts may be manufactured. In this case, the wind turbine blade part may be for instance a root portion of a wind turbine blade. In particular, within the first 20 % of spanwise length measured from its root-side end, the amount of fiber material is largest in a wind turbine blade so that the effect of using the preform elements is greatest and the largest amount of labor may be saved by arranging the fiber materials as preform elements.

A wind turbine blade part according to the invention is manufactured by a method according to the invention. The wind turbine blade part may be an entire wind turbine blade or it may be a part of a wind turbine blade formed from a plurality of wind turbine blade parts.

A wind turbine according to the invention comprises at least one wind turbine blade part according to the invention.

All details and advantages described in relation with the method according to the invention apply correspondingly to the wind turbine blade part according to the invention and to the wind turbine according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: An embodiment of a wind turbine according to the invention comprising three wind turbine blades according to the invention,
- Fig. 2: an arrangement for manufacturing of a wind turbine blade part according to the invention,
- Fig. 3-8: different process steps of an embodiment of a method according to the invention for manufacturing at least a part of a wind turbine,
- Fig. 9: a section of a mold packed with components for describing the embodiment of the method according to the invention,
- Fig. 10: a first embodiment of a joint connection for joining two adjacently arranged preform elements,
- Fig. 11: a second embodiment of a joint connection for joining two adjacently arranged preform elements, and
- Fig. 12: a third embodiment of a joint connection for joining two adjacently arranged preform elements,

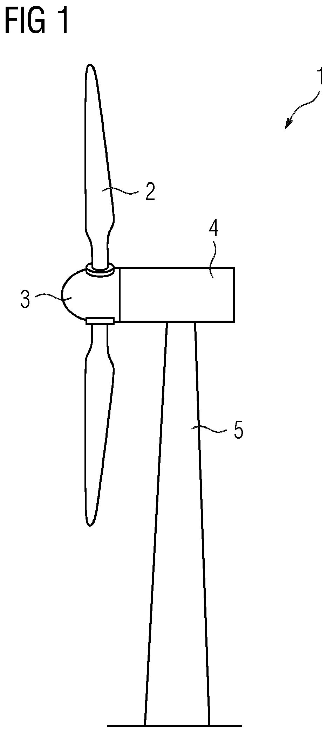

In fig. 1, a wind turbine 1 is shown. The wind turbine 1 comprises a plurality of wind turbine blades 2, which are attached to a hub 3 of the wind turbine 1. The hub 3 is located on the front side of a nacelle 4, wherein the nacelle 4 is supported on a tower 5 of the wind turbine 1.

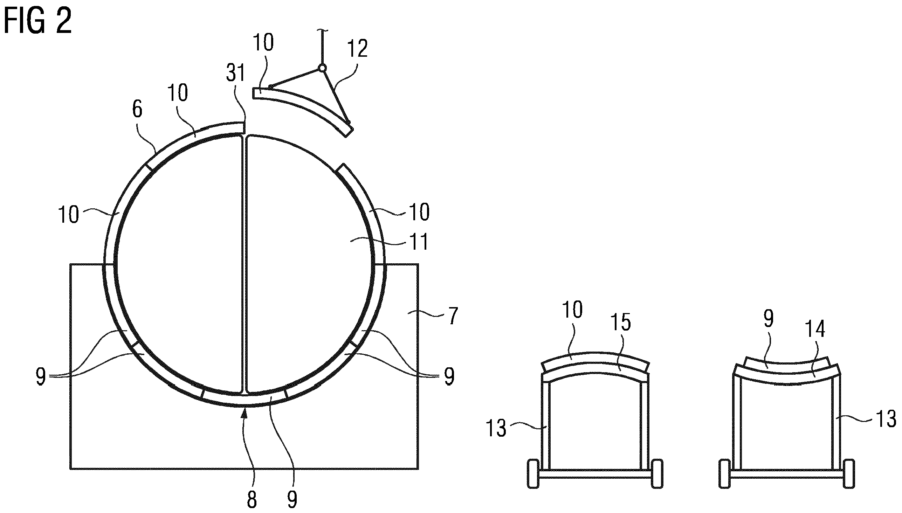

In fig. 2, an arrangement for manufacturing at least a part 6 of a wind turbine blade 2 is shown. The manufacturing process uses a mold 7 with a convex molding surface 8. The wind turbine blade part 6 may be an entire wind turbine blade 2 or it may be a portion of a wind turbine blade 2, for instance a root portion of the wind turbine blade 2. The blade part 6 is manufactured from a plurality of preform elements 9, 10 using one or more laminate supporting elements 11.

The preform elements 9 are arranged on the molding surface 8 of the mold 7. On top of the preform elements 9, two laminate supporting elements 11 are arranged. The laminate supporting elements 11 may be for instance so-called mandrels, which support the components of the blade part 6 during the manufacturing. The laminate supporting elements 11 extend in longitudinal direction through the interior of the blade part 6 to be manufactured. The longitudinal direction of the blade part 6 may also be called the spanwise direction of the blade part 6, which extends in a wind turbine blade 2 from the root-side end to the tip-side end. In Fig. 2, the longitudinal direction is perpendicular to the drawing plane.

The preform elements 9, which are arranged in the molding surface 8, extend over a portion of the circumference of the blade part 6. In this case, the circumference of the blade part 6 has a circular shape, wherein the preform elements 9 arranged on the molding surface 8 extend approximately over 180° of the circular circumference.

The further preform elements 10 are arranged on top of the laminate supporting elements 11, wherein the entire circumference of the blade part 6 is encompassed by the plurality of preform elements 9, 10. It is possible that the circumference has a shape which is different from circular, in particular when a section in the middle or at the tip of the blade is formed by the preform elements 9, 10. In these cases, the circumference may correspond to the cross-section of the airfoil profile of the blade part to be manufactured.

The preform elements 9, 10 may comprise each a structure that corresponds to the entire structure of a shell of the blade part 6 to be fabricated. Alternatively, the structure of the preform elements 9, 10 corresponds to a part of the structure of the shell, wherein two or more preform elements 9, 10 and/or at least one preform element 9, 10 and additional fiber mats are stacked on the molding surface and/or on the laminate supporting elements 11. By providing the materials for shell structure at least partly in form of the preform elements 9, 10, the arrangement of the different materials in the mold is facilitated, since one or more inner layers, one or more outer layers and/or one or more core segments of the shell may be arranged simultaneously using the preform elements 9, 10.

In addition to the depicted preform elements 9, 10, additional components may be arranged on the molding surface 8, between a plurality of the preform elements 9, 10 and/or between the laminate supporting elements 11, as will be described later in more detail.

It is possible that one or more fiber mats, for example glass fiber mats and/or carbon fiber mats, are arranged between the molding surface 8 and at least one of the preform elements 9. The fiber mats may be used to wrap the circumference of blade part at least sectionally.

It is also possible that the fiber mats are arranged adjacently to the preform elements 9 or the further preform elements 10 in the longitudinal direction of the blade part 6 to be manufactured. This allows for manufacturing an adjoining section of the blade part 6 from fiber mats, which are placed in the mold 7 and which are wrapped around the laminate supporting elements 11 after their arrangement. Advantageously, different sections of the blade part 6, or an entire wind turbine blade 2, respectively, may be manufactured differently, in particular depending on the amount of fiber-based material that has to be packed in the mold 7.

Also an arrangement of the fiber mats in between the laminate supporting elements 11 and at least one of the preform elements 9, 10 is possible. In this case, the fiber mats are used to form an inner layer of a laminate structure that forms the shell of the blade part 6. This may be used to provide the inner layer of the shell, or a further inner layer of the shell, respectively, as a separate fiber mats.

For facilitating the arrangement of the components for manufacturing the wind turbine blade part 6 in the mold 7, a lifting means 12 may be used to lift the preform elements 9, 10 and/or the laminate supporting elements 11 into the mold 7. The lifting means 12 is in particular adaptable, so that it may be adapted to the individual geometry of the different preform elements 9, 10 used in the manufacturing process.

The preform elements 9, 10 are provided on supporting devices 13, which each comprise one or more supporting segments 14, 15 which support the preform elements 9, 10 in a shape corresponding to the shape of the preform elements 9, 10 in the blade part 6 to be manufactured. Therefore, the supporting segment 14, which supports the preform elements 9 has a convex shape, wherein the supporting segment 15, which supports the further preform elements 10, has a convex shape. This allows for providing the preform elements 9 and the further preform elements 10 in a shape corresponding to their shape in the blade part 6.

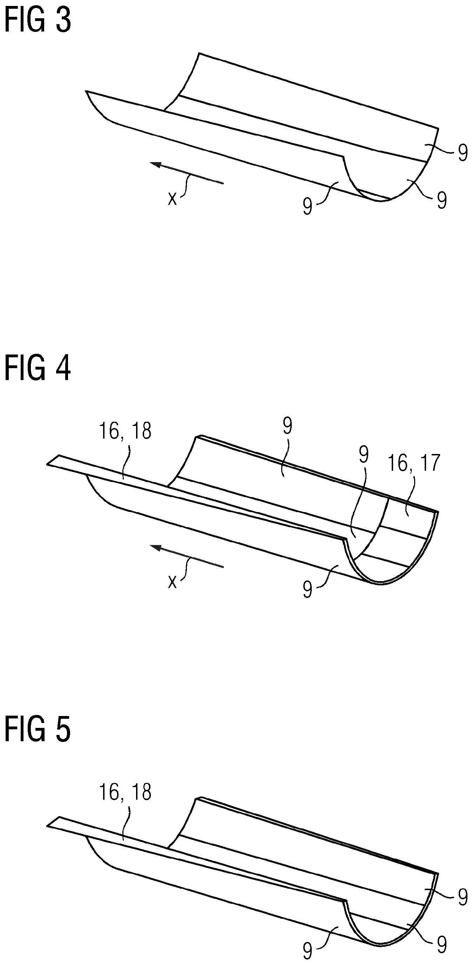

Each of the preform elements 9, 10 may comprise a plurality of layers, in particular one or more layers of a fiber material and/or one or more layers of a core material. The different layers of the preform elements 9, 10 may be locally attached to each other so that the different components forming the preform elements may be handled simultaneously. Since in particular the fiber-based layers of the preform elements 9, 10 are only locally adhered to each other and/or to the rigid core segments, the shape of the preform elements 9, 10 is not rigidly fixed so that they do not necessarily have a solid structure. By providing them already in the final shape and by using an adaptable lifting means 12, the arrangement of the parts for fabricating the wind turbine blade part 6 is facilitated. The arrangement of the components inside the mold 7 is further explained in more detail in relation to the figures 3 to 8.

The manufacturing process of the preform elements 9, 10 may be conducted in a separate preform mold, in which fiberglass mats and any core material as well as a liquid and/or solid binder material are arranged. The components for forming the preform part 9, 10 may be shielded with a vacuum film and a vacuum may be established. When the vacuum is established, a heating cover like a lid or a heating blanket may be arranged on top of the preform mold and heat is supplied, for instance from hot air in the cover and/or from heating pipes below a molding surface of the preform mold.

The temperature is increased to the temperature, required by the binder, for instance to 80-90 °. The temperature is kept there for the required time to proper activate the binder.

After heating, the heating cover may be removed and the preform element 9, 10 may remain in the mold until the element has reached a temperature that is low enough for the item to be touched. The cooled preform element 9, 10 may then be released from the vacuum film. Then, the preform element is lifted off the molding surface of the preform mold and placed on one of the support devices 13 that help hold the geometry of the preformed element. Using the support devices 13, the preform parts 9, 10 may be transported from the preform element mold to the mold 7 used for casting the blade part 6.

In fig. 3, three preform elements 9 arranged on the molding surface 8 of the mold 7 are shown. Please note that in fig. 3 and in the ongoing figures 4 to 8, the mold 7 is not depicted for the sake of clarity. The longitudinal direction of the blade part 6 to be manufactured is denoted as x-axis in these figures. The preform elements 9 form an outer laminate structure of the blade part 6 to be manufactured.

The preform elements 9 are arranged in the mold 7 on the molding surface 8 in such manner, that they are abutting to each other in circumferential direction. It is possible that further preform elements 9 are arranged adjacently to the depicted preform elements 9 in longitudinal direction x, in particular so that they are abutting in longitudinal direction. The preform elements 9 may have the same length in longitudinal direction and/or in circumferential direction or they may have a different lengths in longitudinal and/or circumferential direction.

The preform elements 9 may be arranged in such manner that they form at least one uniform edge in longitudinal direction, or a uniform contact surface to adjacently arranged preform elements or fiber mats, respectively. Alternatively, the preform elements 9 may be arranged with longitudinal offsets between their edges, or their contact surfaces, respectively.

In fig. 4, a plurality of precasted components 16 is arranged on the preform elements 9. The precasted components 16 comprise root segments 17 used for supporting the root-side end of the wind turbine blade part 6 to be manufactured. The precasted components 16 further comprise a beam structure 18 that is arranged on the preform elements 9, wherein the beam structure 18 extends in longitudinal direction x.

As it is depicted in fig. 5, additional preform elements 9 are arranged on the precasted components 16 and/or on the preform elements 9 that are arranged directly on the molding surface 8 of the mold 7. The additional preform elements 9 form an inner laminate structure on the shell of the wind turbine blade part 6 to be manufactured.

Afterwards, one or more laminate supporting elements 11, like the two mandrels depicted in fig. 2, are arranged to allow for arranging further preform elements 10 for encompassing the entire circumference of the blade part 6 to be manufactured. The laminate supporting elements 11 are not depicted in figures 5 to 8 for the sake of clarity.

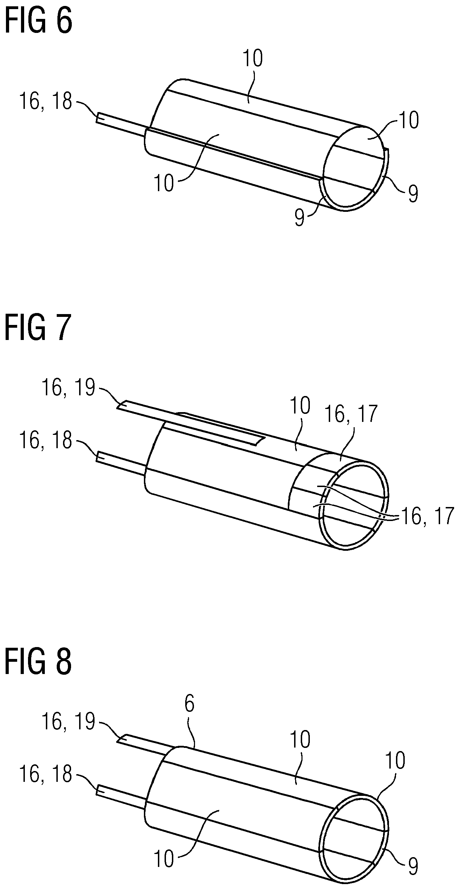

In fig. 6, preform elements 10 are arranged on the laminate supporting elements 11. The preform elements 9, which are arranged, or stacked, on the molding surface 8, and the further preform elements 10 encompass the entire circumference of the blade part 6 to be manufactured.

In fig. 7, further precasted components 16 arranged on the further preform elements 10 are shown. Again, a plurality of root segments 17 is arranged for encompassing the entire circumference of the blade part 6 at its root-side end. Opposing to the beam 18, a further beam structure 19 is arranged on the further preform elements 10. It is possible that in between the beam structures 18, 19, a shear web (not depicted) is arranged for supporting the beam structures 18, 19 against each other. The shear web may be arranged between the two laminate supporting elements 11 so that it may connect the lower beam structure 18 to the upper beam structure 19.

As additional precasted components 16, also lightning conductors may be arranged between the preform elements 9, 10 and/or the laminate supporting elements 11. It is also possible that one or more sensor devices are arranged between the preform elements 9, 10, the molding surface 8 and/or the laminate supporting elements 11.

As shown in fig. 8, the outer laminate of the wind turbine blade part 6 to be manufactured is formed by additional further preform elements 10, which are arranged on the precedingly arranged further preform elements 10 and/or the precasted structures 16 in the upper half of the blade part 6.

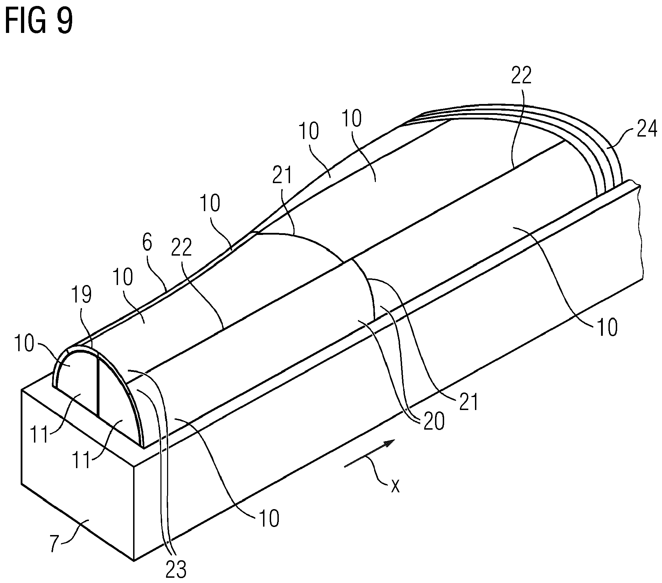

In fig. 9, a perspective view on the mold 7 and the components arranged in the mold 7 is shown. As it can be seen, the upper halves of the laminate supporting elements 11 as well as the upper half of the blade part 6 to be manufactured protrude from the mold 7. From the root-side end 19 of the blade part 6 to be manufactured, three pairs 20 of longitudinally adjacently arranged preform elements 10 are shown.

The contacting surfaces 21 of the longitudinal adjacently arranged pairs 20 of preform elements 10 have an offset in longitudinal direction in order to avoid cracking after casting of the blade part 6. In addition to the longitudinal offset, also a circumferential offset of circumferential abutting contact surfaces 22 (not depicted in fig. 9) of one or more pairs 23 of circumferentially abutting preform elements 10 may be provided. Also between the preform elements 9, which are not visible in fig. 9 since they are arranged on the molding surface 8 in the interior of the mold 7, offsets in longitudinal and/or circumferentially direction between adjacently arranged abutting preform elements 9 may be provided.

In longitudinal direction x adjacently to the preform elements 9, 10, fiber mats 24 are arranged. The preform elements 9, 10 may be in particular arranged in a part of the mold which corresponds to a root-side end portion of a wind turbine blade 2, in particular in a portion which corresponds to 10 % to 30 %, preferably between 15 % and 25 %, for example 20 %, of the spanwise length of a wind turbine blade 2 from its root-side end 19. In this portion, the majority of fiber-based material is arranged in the fabrication of a wind turbine blade. By using the preform elements 9, 10 as described for building up the structure of the wind turbine blade part 6 to be fabricated, the arrangement of the fiber material in the mold is facilitated.

Alternatively, a part of a wind turbine blade 2 corresponding to the first 10 % to 30 %, preferably 15 % and 25 %, for example 20 %, of the spanwise length of a wind turbine blade 2 from its root-side end 19 may be manufactured. The blade part 6 may be connected to one or more further blade parts for forming an entire wind turbine blade 2.

To provide a stable structure of the wind turbine blade part 6, the abutting edges of abutting preform elements 9, 10 form joint connections, which are connected during the arrangement of the preform elements 9, 10. By the joint connection, a partial overlapping of the preform elements 9, 10 at the interfaces between two adjacently arranged preform elements 9, 10 may be obtained for increasing the stability and/or integrity of the blade part 6 to be manufactured.

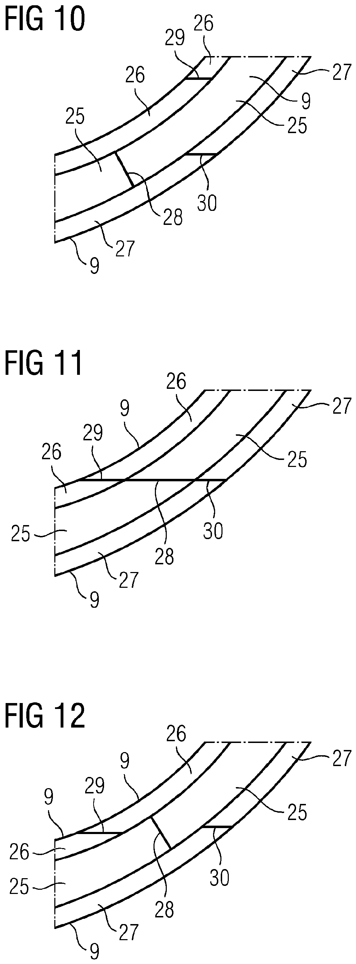

As it is depicted in fig. 10, the preform elements 9 each comprise a core segment 25 arranged between at least one inner layer 26 and at least one outer layer 27 of a fiber material like glass fibers, carbon fibers or the like. The core segments 25, which are made for instance of balsa wood, form a butt joint as joint connection 28. The inner layers 26 and the outer layer 27 each form a scarf joint as joint connections 29, 30. The joint connections 28, 29, 30 are provided with an offset in circumferential direction towards each other. This allows for the core segment 25, or the inner layer 26 and/or the outer layer 27, respectively, to partially overlap when the preform elements 9 are connected during the arrangement. To facilitate the arrangement and the joining in the mold 7, the joint connections 29, 30 of the inner layers 26 and the outer layers 27 are aligned vertically to each other.

The core segment 25, the inner layer 26 and the outer layer 27 of a preform part 9 are locally adhered to each other, for instance by a pointwise local attachment using a distributed binder, in particular a powder binder or the like. Therefore, the inner layers 26 and the outer layers 27 of the preform parts 9 comprise large portion of dry fiber material which may be infused with resin for casting the blade part 6. It is possible that the preform elements 9 comprise more than one inner layer 26 and/or more than one outer layer 27, which each may be joined to the corresponding layers of adjacently arranged preform elements 9, 10 as depicted by a butt joint connection or a scarf joint connection.

In fig. 11, the second embodiment for joining adjacently arranged preform elements 9 is shown. In this case, both the joint connection 28 and the joint connections 29 and 30 are provided as scarf joint with a mutual contact surface and hence without an offset of the contact surfaces in circumferential direction.

In fig. 12, a third embodiment of a connection between adjacently arranged preform elements 9 is shown. In this embodiment, the joint connections 29 and 30 between the inner layers 26, or the outer layers 27, respectively, are provided as scarf joints, wherein the joint connection 28 between the core segments 25 is provided as a butt joint. In this embodiment, there is an offset in circumferential direction between the individual joint connections 28, 29 and 30 as previously described in relation to fig. 10.

The aforementioned embodiments for connecting preform elements 9 may be also used to connect preform elements 9 to further preform elements 10 and/or to connect preform elements 9, 10, which are abutting each other in longitudinal direction of the blade part 6 to be manufactured, as they are depicted in fig. 9.

Referring back to fig. 2, wherein two further preform elements 10 are arranged on the laminate supporting elements 11 offset in circumferential direction from a peak 31 of the circumference of the blade part 6 to be manufactured. This allows for producing the blade part 6 at a place with a reduced ceiling height, since the height, in which the further preform parts 10 have to be lifted, is reduced compared to an arrangement of a preform part in such manner that is overlaps the peak 31 of the circumference of the blade part 6.

It is possible that between the molding surface 8 and the first layer of preform elements 9, one or more layers of a fiber material, for instance glass fiber mats or the like, are arranged, wherein the glass fiber mats are wrapped around the outer circumference of the blade part 6 to be manufactured, or the preform elements 9, 10, respectively, after their arrangement. In addition or alternatively, mats of a fiber-based material may also be arranged in between the preform elements 9, 10 and the laminate supporting elements 11 for forming the inner layer of the laminate structure of the blade part 6.

After all components of the blade part 6 to be manufactured have been arranged, the mold 7 may be closed for instance by placing an upper mold part on top of the mold 7 or by applying vacuum covers or the like. The blade part 6 is then manufactured from the components arranged in the mold 7 by infusing a resin at least partly into the preform parts 9, 10. The resin is infused in particular in the layers of the fiber-based material of the preform elements 9, 10 so that the resin may be hardened afterwards to form a solid and robust blade part 6. The laminate supporting elements 11 may remain inside the blade or they may be removed afterwards from the interior of the blade part 6.

Although the present invention has been described in detail with reference to the preferred embodiment, the present invention is not limited by the disclosed examples from which the skilled person is able to derive other variations without departing from the scope of the invention.

## Claims

1. Method for manufacturing at least a part (6) of a wind turbine blade (2) in a resin-based casting process using a mold (7), wherein at least one preform element (9), at least one further preform element (10) and at least one laminate supporting element (11) are arranged in the mold (7), wherein the preform element (9) is arranged on a molding surface (8) of the mold (7) and extends over a section of the circumference of the blade part (6) to be manufactured, wherein the laminate supporting element (11) is arranged on the preform element (9) and the further preform element (10) is arranged on the laminate supporting element (11), wherein the preform element (9) and the further preform element (10) extend over the entire circumference of the blade part (6) to be manufactured, wherein the preform elements (9, 10) are at least partly infused with a resin for casting of the blade part (6) .

2. Method according to claim 1, **characterized in that** one or more fiber mats are arranged adjacently to the preform elements (9, 10) in a longitudinal direction of the blade part (6) to be manufactured, between the molding surface (8) and at least one of the preform elements (9, 10), on at least one of the preform elements (9, 10), and/or between the laminate supporting element (11) and at least one of the preform elements (9, 10).

3. Method according to claim 1 or 2, **characterized in that** a plurality of preform elements (9, 10) is arranged on the molding surface (8) and/or on the laminate supporting element (11), wherein adjacently arranged preform elements (9, 10) are abutting in circumferential direction and/or in longitudinal direction of the blade part (6) to be manufactured.

4. Method according to claim 3, **characterized in that** the preform elements (9, 10) are arranged in such manner that the contact surfaces (22) of two or more neighbouring pairs of circumferentially abutting preform elements (9, 10) have an offset in the circumferential direction and/or that the contact surfaces (21) of two or more neighbouring pairs of longitudinally abutting preform elements (9, 10) have an offset in the longitudinal direction.

5. Method according to claim 3 or 4, **characterized in that** the abutting edges of a pair (20) of abutting preform elements (9, 10) form a joint connection, wherein the joint connection is connected during the arrangement of the preform elements (9, 10).

6. Method according to claim 5, **characterized in that** for at least a part of the abutting preform elements (9, 10), preform elements (9, 10) comprising a core segment (25) arranged between at least one inner layer (26) and at least one outer layer (27) of a fiber material are used, wherein the inner layers (26), the outer layers (27) and/or the core segments (25) of two adjacently arranged preform elements (9, 10) form each a butt joint or a scarf joint.

7. Method according to claim 6, **characterized in that** the joints between the inner layers (26), the core segments (25) and/or the outer layers (27) of two adjacently arranged preform elements (9, 10) are arranged with a circumferential and/or longitudinal offset towards each other.

8. Method according to one of the preceding claims, **characterized in that** at least two further preform elements (10) are arranged on the laminate supporting element (11), wherein the further preform elements (10) are arranged in circumferential direction offset from a peak (31) of the circumference of the blade part (6) to be manufactured.

9. Method according to one of the preceding claims, **characterized in that** the preform elements (9, 10) are provided on at least one support device (13), wherein the support device (13) comprises one or more supporting segments (14, 15) that support the preform element (9, 10) in a shape corresponding to the shape of the preform element (9, 10) in the wind turbine blade part (6) to be manufactured.

10. Method according to one of the preceding claims, **characterized in that** the preform elements (9, 10) are arranged on the molding surface (8) and/or on the laminate supporting element (11) using a lifting means (12), in particular an adaptable and/or automated lifting means.

11. Method according to one of the preceding claims, **characterized in that** at least one precasted component (16) and/or at least one sensor device are arranged between the molding surface (8) and at least one of the preform elements (9, 10), between the laminate supporting element (11) and/or at least one of the preform elements (9, 10), and/or on at least one of the preform elements (9, 10).

12. Method according to claim 11, **characterized in that** a root segment (17), a beam structure (18, 19), a shear web, and/or a lightning conductor is used as precasted component.

13. Method according to one of the preceding claims, **characterized in that** the preform elements (9, 10) are arranged in a portion of the mold (7) corresponding to a root-side end of a wind turbine blade (2), in particular in a portion which corresponds to 10 % to 30 % of the spanwise length of a wind turbine blade (2) from its root-side end.

14. Wind turbine blade part manufactured according to one of the preceding claims.

15. Wind turbine comprising at least one wind turbine blade part (6) according to claim 14.
